# FASCICULE DE BREVET EUROPEEN

(11) **EP 0 922 603 B1**
(45) Date de publication et mention de la délivrance du brevet: **04.09.2002**
(21) Numéro de dépôt: 98403101.3
(22) Date de dépôt: 09.12.1998
(51) Int. Cl.: B60K 15/06

(54) **Dispositif de réserve pour un réservoir de carburant de véhicule automobile**
Vorratsbehälter für den Kraftstofftank eines Kraftfahrzeuges
Reservoir for motor vehicle fuel tank

(30) Priorité: 10.12.1997 FR 9715619
(43) Date de publication de la demande: 16.06.1999
(73) Titulaire: MARWAL SYSTEMS, 51000 Chalons en Champagne (FR)
(72) Inventeur: Flambert, William, 51000 Chalons en Champagne (FR)
(74) Mandataire: Texier, Christian

(56) Documents cités:
- EP-A- 0 798 458
- FR-A- 2 525 162
- FR-A- 2 746 855

## Description

L'invention concerne les dispositifs de réserve pour réservoir de carburant de véhicule.

On connaît d'après le document FR-2 746 855 un réservoir de carburant à deux poches pour véhicule automobile, comportant une cuve et deux bols de réserve introduits dans la cuve à travers une ouverture supérieure respective de chaque poche pour s'étendre au fond de la poche associée. Ces bols permettent de ménager une réserve de carburant servant de secours lorsque la cuve est pratiquement vide. Toutefois, ce réservoir a pour inconvénient qu'il requiert d'introduire dans la cuve et de positionner chacun des bols, ce qui est relativement long. De plus, pour chaque bol, la capacité du bol de réserve est limitée par les dimensions de l'ouverture de la poche associée permettant son introduction, ainsi que par la configuration générale de la poche. Par exemple, il n'est pas possible d'introduire dans la poche un bol de réserve cylindrique ayant une capacité supérieure au volume défini par la section de l'ouverture multipliée par la hauteur entre cette ouverture et le fond de la poche.

Un but de l'invention est de fournir un dispositif de réserve facile et rapide à installer dans une cuve et ayant une capacité importante par rapport aux dimensions de l'ouverture et à la configuration de la cuve à laquelle il est destiné.

En vue de la réalisation de ce but, on prévoit selon l'invention un dispositif de réserve pour un réservoir de carburant de véhicule, comportant au moins deux bols de réserve, et des moyens de liaison adaptés à relier les deux bols l'un à l'autre par une liaison non rigide.

Ainsi, pour introduire le dispositif dans la cuve, on peut disposer les deux bols dans une position relative l'un par rapport à l'autre différente de la position relative finale prévue pour les deux bols dans la cuve. Notamment, on peut ainsi introduire les deux bols dans l'ouverture d'une cuve de réservoir qui autrement, du fait de sa configuration et de sa faible profondeur, ne permettrait pas l'introduction des deux bols dans leur position relative. Il s'ensuit qu'on peut disposer dans la cuve un dispositif de réserve de grande capacité par rapport aux dimensions de l'ouverture et à la configuration de la cuve. De plus, du fait que les deux bols demeurent reliés l'un à l'autre durant cette introduction, on garde un bon contrôle des deux bols et la manoeuvre d'introduction est simple à exécuter.

Avantageusement, les moyens de liaison sont adaptés à relier les deux bols par une articulation.

Avantageusement, les moyens de liaison comportent au moins une partie flexible adaptée à relier les deux bols.

On constitue ainsi l'articulation de façon particulièrement simple.

Avantageusement, les moyens de liaison sont d'une seule pièce avec l'un des bols et sont adaptés à être fixés à l'autre bol.

Avantageusement, les moyens de liaison sont adaptés à être fixés à l'autre bol par encliquetage.

Avantageusement, les moyens de liaison sont adaptés à relier des bases de chaque bol l'une à l'autre.

Cette configuration simplifie la manoeuvre des bols lors de leur introduction.

Avantageusement, l'un des bols présente une plus grande section suivant un plan transversal parallèle à une base du bol, de même forme générale qu'une plus grande section de l'autre bol suivant un plan transversal perpendiculaire à une base de l'autre bol et parallèle à un axe de l'articulation.

Ainsi, le dispositif de réserve présente une capacité particulièrement importante par rapport aux dimensions de l'ouverture d'une cuve juste supérieures à celles de cette section.

Avantageusement, l'un des bols a une forme générale profilée suivant une direction perpendiculaire à une base du bol, l'autre bol ayant une forme générale profilée suivant une direction, perpendiculaire à une base de l'autre bol et parallèle à un axe de l'articulation.

Ainsi, on optimise la capacité du dispositif de réserve.

Avantageusement, le dispositif comporte des moyens de rigidification pour relier rigidement les deux bols l'un à l'autre.

Ainsi, on améliore la stabilité du dispositif de réserve une fois celui-ci introduit dans une cuve.

Avantageusement, les moyens de rigidification sont adaptés à coopérer avec les moyens de liaison pour relier rigidement les deux bols.

Avantageusement, les moyens de rigidification comprennent des moyens d'encliquetage.

On obtient ainsi la rigidification de façon simple et rapide.

Avantageusement, le dispositif comporte un conduit adapté à assurer une communication de carburant directement de l'un à l'autre des bols.

Avantageusement, le dispositif comporte un clapet antiretour agencé pour permettre une alimentation en carburant d'un premier des bols au moyen du conduit à partir d'un deuxième des bols, en interdisant une alimentation en carburant du deuxième bol au moyen du conduit à partir du premier bol.

Avantageusement, le conduit relie une zone la plus basse de l'un des bols à une zone la plus basse de l'autre bol.

Avantageusement, le dispositif est agencé pour permettre un transfert de carburant à partir de l'un des bols directement jusqu'à l'autre bol, par dessus des bords des deux bols.

Ainsi, l'un des bols est adapté à alimenter l'autre par débordement.

Avantageusement, au moins l'un parmi les deux bols comporte un couvercle obturant partiellement une zone supérieure du bol.

Avantageusement, le dispositif comporte au moins un filtre agencé pour permettre une alimentation en carburant de l'un des bols à partir du réservoir à travers le filtre.

Avantageusement, chaque filtre s'étend sous l'un respectif des bols.

Avantageusement, le filtre est adapté à s'étendre au-dessous de l'autre bol.

On améliore ainsi l'encombrement du dispositif de réserve.

On prévoit également selon l'invention un réservoir de carburant pour véhicule,' comportant une cuve et un dispositif selon l'invention.

Avantageusement, la cuve présente une ouverture permettant d'introduire dans la cuve les bols du dispositif, l'ouverture ayant des dimensions juste suffisantes pour l'introduction de l'un des bols.

Ainsi, la capacité de ce bol est optimisée par rapport aux dimensions de l'ouverture.

D'autres caractéristiques et avantages de l'invention apparaîtront encore dans la description suivante de deux modes préférés de réalisation donnés à titre d'exemples non limitatifs. Aux dessins annexés :
- la figure 1 est une vue en coupe transversale verticale suivant le plan I-I des autres figures d'un dispositif de réserve selon un premier mode de réalisation de l'invention ;
- la figure 2 est une vue partielle en coupe verticale suivant le plan II-II des autres figures du dispositif de réserve de la figure 1 ;
- la figure 3 est une vue en coupe verticale suivant le plan III-III des autres figures, du dispositif de réserve de la figure 1 ;
- la figure 4 et la figure 5 sont deux vues en coupe horizontale suivant les plans IV-IV et V-V respectivement des autres figures, du dispositif de réserve de la figure 1;
- les figures 6 à 9 sont des vues en coupe verticale suivant les plans VI-VI, VII-VII, VIII-VIII et IX-IX respectivement des autres figures, du dispositif de réserve de la figure 1;
- les figures 10 et 11 sont deux vues analogues à la figure 1 montrant deux situations d'accélération lors de l'utilisation du dispositif de réserve ;
- les figures 12 à 17 montrent des étapes successives de l'introduction du dispositif de réserve de la figure 1 dans un réservoir ;
- la figure 18 est un diagramme montrant la circulation des fluides dans le dispositif de réserve de la figure 1;
- les figures 19 à 21 sont des vues en coupe verticale suivant les plans XIX-XIX, XX-XX et XXI-XXI de la figure 21 d'un dispositif de réserve selon un deuxième mode de réalisation de l'invention ; et
- la figure 22 est une vue en coupe horizontale de principe du dispositif de réserve de la figure 19.

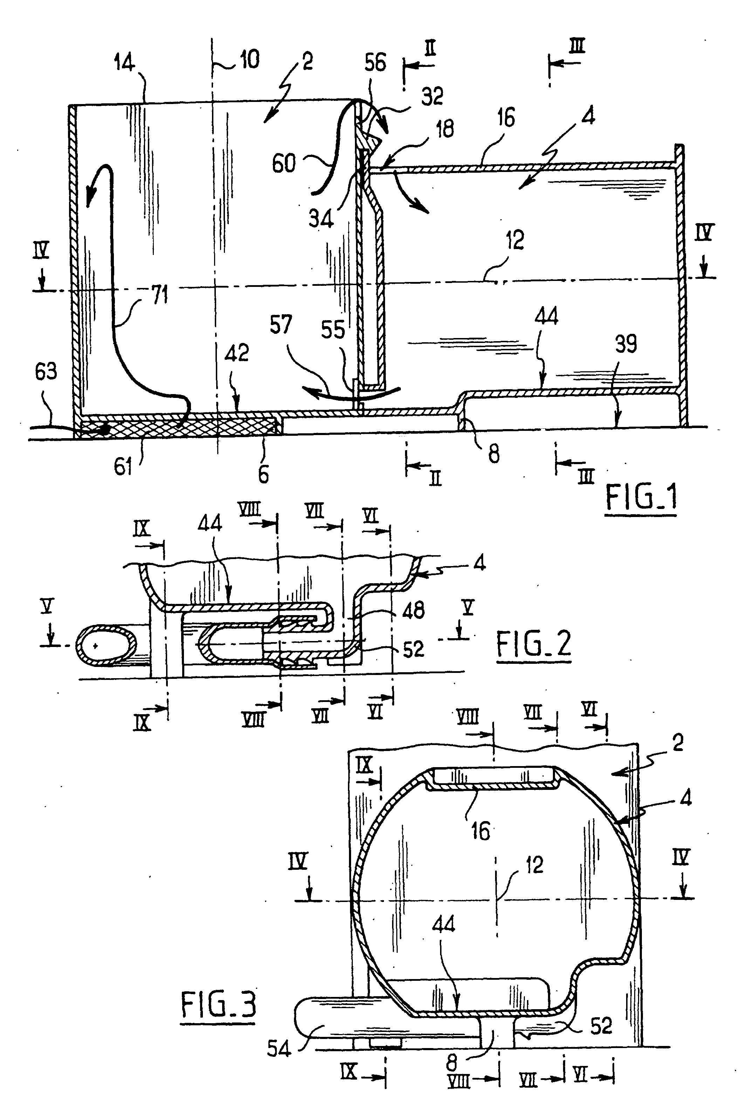

En référence aux figures 1 à 9, dans un premier mode de réalisation, le dispositif de réserve selon l'invention comporte un premier bol 2, ici bol principal, et un deuxième bol 4, ici bol auxiliaire. Chacun des deux bols est en matière plastique d'un seul tenant. Chaque bol 2, 4 a une forme générale profilée cylindrique à section transversale droite circulaire. Le bol principal 2 et le bol auxiliaire 4 ont chacun une base 6, 8 présentant des pieds leur permettant de reposer sur une face plane d'un réservoir de carburant de véhicule automobile. La base 6 du bol principal 2 s'étend à une extrémité axiale du cylindre dans un plan général perpendiculaire à un axe longitudinal 10 du cylindre. La base 8 du bol auxiliaire 4 s'étend le long d'une génératrice du cylindre dans un plan général parallèle à un axe longitudinal 12 du cylindre. Ainsi, le bol principal 2 est adapté à reposer avec le cylindre "debout" sur la base 6, et le bol auxiliaire 4 est adapté à reposer avec le cylindre "couché" sur la base 8. Le bol principal 2 présente un bord libre supérieur 14 définissant une extrémité axiale supérieure ouverte du bol principal 2 opposée à sa base 6. Les deux cylindres ont sensiblement mêmes diamètres. Le bol auxiliaire 4 comporte un couvercle 16, de forme plane et s'étendant parallèlement à la base 8 en ménageant seulement un petit orifice 18 en partie supérieure du bol auxiliaire 4.

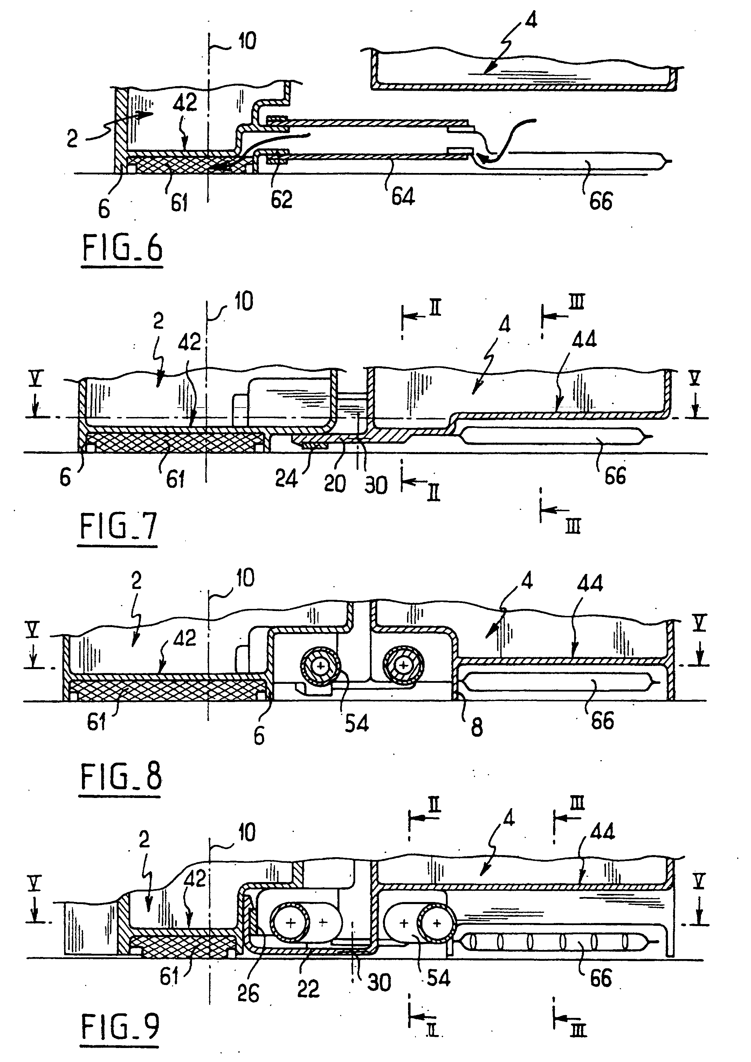

En référence aux figures 7 à 9, le bol auxiliaire 4 comporte deux pattes 20, 22 chacune de forme générale allongée plane s'étendant à partir d'une extrémité axiale du bol, parallèlement à l'axe 12 en direction opposée au bol. La patte 20 a une forme rigoureusement plane. La patte 22 a une forme coudée en "L" et s'étend parallèlement à l'axe 12, puis perpendiculairement à celui-ci, en direction de cet axe. Chacune des pattes 20, 22 présente un ergot à son extrémité libre. Les deux pattes s'étendent de part et d'autre d'un plan longitudinal médian du bol auxiliaire 4 perpendiculaire à sa base 8.

Le bol principal 2 comporte deux logements 24, 26 adaptés à recevoir les pattes 20, 22 respectives pour réaliser un encliquetage interdisant le retrait des pattes, une fois celles-ci insérées dans les logements. Ces deux logements 24, 26 s'étendent au voisinage de la base 6 du bol principal 2. Chaque logement est défini entre une languette du bol principal 2 et la paroi du bol en regard.

Les pattes 20, 22 et les logements 24, 26 sont disposés de sorte que, lorsque les pattes et les logements sont encliquetés, le bol principal 2 et le bol auxiliaire 4 peuvent reposer au moyen de leurs bases 6, 8 sur un support plan commun, avec l'axe 10 du bol principal 2 perpendiculaire à l'axe 12 du bol auxiliaire 4, les deux axes étant sécants, et ce sans que les pattes 20, 22 ne soient sollicitées. Une extrémité axiale du bol auxiliaire 4 s'étend alors en regard et au voisinage d'une paroi du bol principal 2, parallèlement à une génératrice de cette paroi. Les pattes 20, 22 sont configurées pour pouvoir être fléchies au moins une fois au cours de la durée de vie du dispositif de réserve sur un angle maximum compris par exemple entre 60 et 90°. Les deux pattes 20, 22 constituent des moyens ce liaison mécaniques adaptés à relier les deux bols 2, 4 l'un à l'autre en définissant entre eux une liaison non rigide souple qui est ici une articulation autour d'un axe 30 perpendiculaire au plan commun défini par les axes 10, 12 des bols une fois ceux-ci reliés. Les deux pattes définissent cet axe 30 de sorte qu'il est adjacent aux bases 6, 8 des bols.

Le bol principal 2 comporte un ergot 32 s'étendant à son bord supérieur 14 sur une face externe de sa paroi, en saillie de celle-ci. L'ergot est orienté vers la base 6 de ce bol principal 2 et se trouve sur la génératrice de ce bol 2 destinée à être la plus proche du bol auxiliaire 4 une fois les bols reliés par les pattes 20, 22. Cet ergot 32 est conformé pour venir en prise par encliquetage avec un bord supérieur 34 du bol auxiliaire 4 lorsque les deux bols s'étendent dans la position précitée où les pattes relient les bols sans être sollicitées. L'ergot 32 présente classiquement une face externe inclinée adaptée à faciliter la venue du bord 34 du bol auxiliaire 4 en prise avec l'ergot. L'ergot 32 et le bord 34 constituent des moyens de rigidification du dispositif de réserve coopérant avec les pattes 20, 22 de sorte que les deux bols 2, 4 sont alors rigidement immobilisés l'un par rapport à l'autre.

Le dispositif de réserve est adapté à faire partie d'un réservoir de carburant pour véhicule automobile comportant une cuve 36, les deux bols s'étendant dans une même poche de la cuve. Cette cuve, d'un type classique, présente ici une ouverture supérieure 38 à section circulaire de même forme que la section droite du bol principal 2 et du bol auxiliaire 4 perpendiculairement à leurs axes 10, 12 respectifs. La section de l'ouverture 38 a des dimensions juste suffisantes pour permettre le passage successif des deux bols 2, 4 avec leur axe parallèle à un axe de l'ouverture.

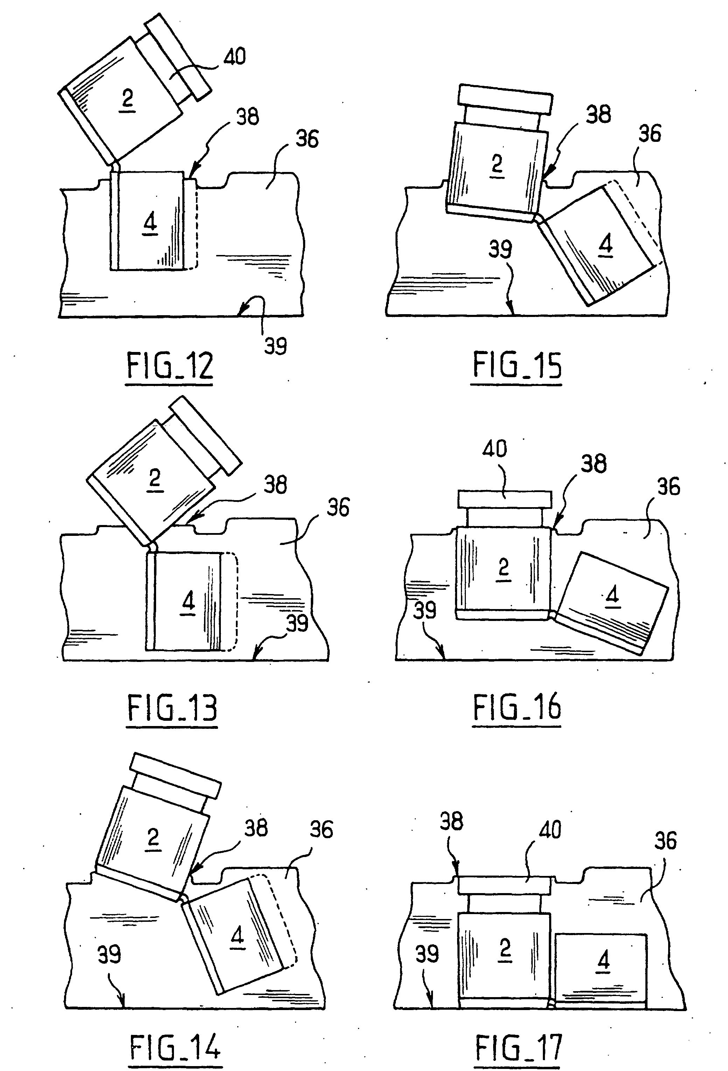

En référencé aux figures 12 à 17, pour monter le dispositif de réserve, on fixe les deux pattes 20, 22 du bol auxiliaire 4 sur le bol principal 2 en les encliquetant dans les logements 24, 26. Ensuite, on introduit dans l'ouverture 38 le bol auxiliaire 4 par une extrémité axiale de ce bol distante du bol principal 2, l'axe 12 étant parallèle à l'axe de l'ouverture. A partir d'un certain stade, cette introduction nécessite de fléchir les deux pattes 20, 22 comme on le voit sur les figures 12 et 13. Après que le bol auxiliaire 4 est entièrement entré dans la cuve 36, il vient en contact par son extrémité axiale avec le fond 39 de la cuve. On fait alors pénétrer dans l'ouverture 38 une extrémité axiale du bol principal 2 proche du bol auxiliaire 4, comme sur la figure 14. Cela nécessite d'accentuer la flexion des pattes 20, 22 et de déporter le bol auxiliaire 4 déjà introduit vers un côté de la cuve 36.

En référence aux figures 15 à 16, on poursuit l'introduction du bol principal 2. Au cours de celle-ci, le bol auxiliaire 4 pivote autour de l'axe 30 de l'articulation en direction du bol principal 2. Progressivement, la base du bol auxiliaire 4 devient parallèle au fond 39 de la cuve puis en contact avec celui-ci. La flexion sur les pattes 20, 22 se réduit jusqu'à devenir presque nulle lorsque, en référence à la figure 17, les deux bases 6, 8 des bois reposent presque sur le fond 39. On peut alors forcer le bol principal 2 en direction du fond 39 pour mettre les deux bases 6, 8 en contact avec le fond 39 et ainsi encliqueter l'ergot 32 sur le bord 34 de façon à rigidifier le dispositif de réserve.

De préférence, l'ergot 32 sera le plus petit possible pour ne pas gêner l'introduction du bol principal 2 dans le réservoir. Alternativement, pour ne pas gêner l'introduction du dispositif de réserve dans le réservoir, on pourra disposer l'ergot 32 sur le bol auxiliaire 4 pour qu'il vienne en prise avec un bord du bol principal 2.

Le dispositif de réserve est adapté à recevoir une pompe de carburant 40 d'un type classique s'étendant en partie dans le bol principal 2, adaptée à pomper du carburant contenu dans le bol principal 2, voire à rejeter dans ce bol du carburant non consommé par le moteur. Les manoeuvres décrites en référence aux figures 12 à 17 peuvent être exécutées avec la pompe 40 déjà au moins en partie disposée dans le bol principal 2.

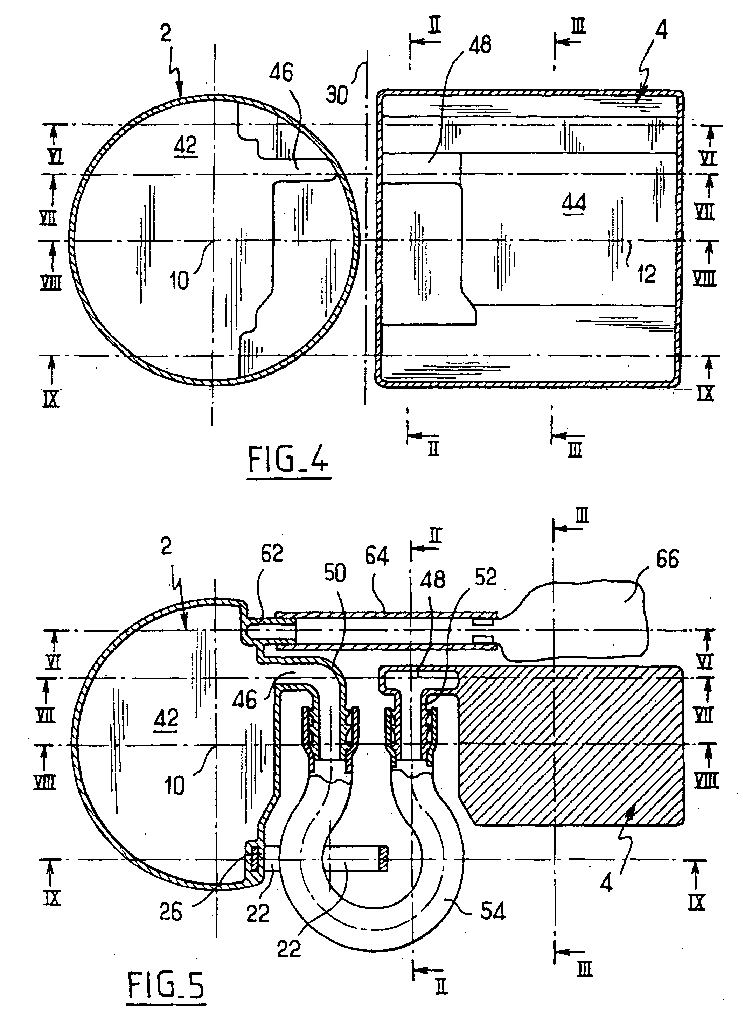

En référence notamment aux figures 4 et 5, chacun des bols 2, 4 présente un fond 42, 44 à plusieurs niveaux, présentant une unique zone 46, 48 la plus proche de la base, c'est-à-dire la plus basse. Chaque fond est conformé pour permettre l'écoulement du carburant dans le bol par gravité en direction de cette zone 46, 48 la plus basse. Les deux zones 46, 48 s'étendent à une même hauteur en position non sollicitée des pattes 20, 22. Chaque bol 2, 4 présente une embouchure tubulaire 50, 52 d'un seul tenant avec le bol et communiquant vers l'extérieur du bol avec cette zone la plus basse, l'axe de l'embouchure étant à la même hauteur que la zone 46, 48 associée. Les deux embouchures 50, 52 ont chacune une forme en "L" et sont généralement symétriques l'une de l'autre par rapport à l'axe d'articulation 30. Ainsi, ces embouchures ont des tronçons mutuellement coaxiaux s'étendant en direction l'un de l'autre et des tronçons parallèles entre eux. Avantageusement, les deux embouchures 50, 52 s'étendent le plus bas possible et le plus près possible l'une de l'autre. Le dispositif comporte un conduit souple flexible 54 relié aux deux embouchures 50, 52 et mettant celles-ci en communication de fluide. Le conduit 54 présente un tronçon médian recourbé en un arc de cercle s'étendant sur trois-quarts de cour. Son axe s'étend en étant parallèle aux bases 6, 8 des bols en position non sollicitée des pattes. L'axe 30 de l'articulation sert d'axe de symétrie au conduit 54. Cette disposition du conduit 54 lui permet de ne pas gêner les manoeuvres d'introduction du dispositif de réserve dans la cuve. En particulier, le conduit 54 se fléchit alors autour de l'axe 30.

Le dispositif comporte un clapet antiretour 55, représenté schématiquement sur les figures 1, 10 et 11, associé au conduit 54 au niveau de l'embouchure 50 du bol principal 2. Ce clapet 55 est agencé de sorte que le bol principal 2 peut être alimenté en carburant à partir du bol auxiliaire 4 via le conduit 54, comme indiqué par la flèche 56 sur la figure 1, mais pas l'inverse. Autrement dit, on interdit l'alimentation du bol auxiliaire 4 par le bol principal 2 via le conduit 54. Cette alimentation du bol principal 2 par le bol auxiliaire 4 se fait automatiquement lorsque le niveau de carburant dans le bol principal 2 devient inférieur à celui dans le bol auxiliaire 4.

L'ouverture supérieure 18 du bol auxiliaire 4 s'étend au voisinage du bol principal 2. Elle est contiguë au bord 34 coopérant avec l'ergot 32. De plus, le bord 14 du bol principal 2 a sa zone la plus basse 56 s'étendant au-dessus de l'ergot 34. Cette disposition permet l'alimentation du bol auxiliaire 4 à partir du bol principal 2 par débordement de celui-ci, par-dessus la zone 56 et à travers l'ouverture 18 comme indiqué par la flèche 60 de la figure 1, par exemple du fait des mouvements du véhicule.

Le bol principal 2 déborde en permanence tant qu'il y a de l'essence dans le réservoir autour du dispositif de réserve. Il y a donc un transfert permanent de carburant du bol principal 2 jusqu'au bol auxiliaire 4 à travers l'ouverture 18, et une circulation de carburant permanente du bol auxiliaire 4 vers le bol principal 2 à travers le clapet 55. On assure ainsi un autonettoyage du clapet.

Le dispositif comporte, de façon non représentée en détail et connue en soi, un organe de remplissage 69 du bol principal 2 en carburant. Le dispositif comporte en outre une crépine formant filtre 61 clipsée sous le fond du bol principal 2 et en communication de fluide avec cet organe 69 selon la flèche 71 de la figure 1 et avec le réservoir de carburant selon la flèche 63. Cet organe 69 peut être le premier étage d'une pompe double étage, une pompe à jet, ou analogue. L'organe de remplissage 69 alimente le bol principal 2 en carburant à partir du réservoir à travers la crépine 61.

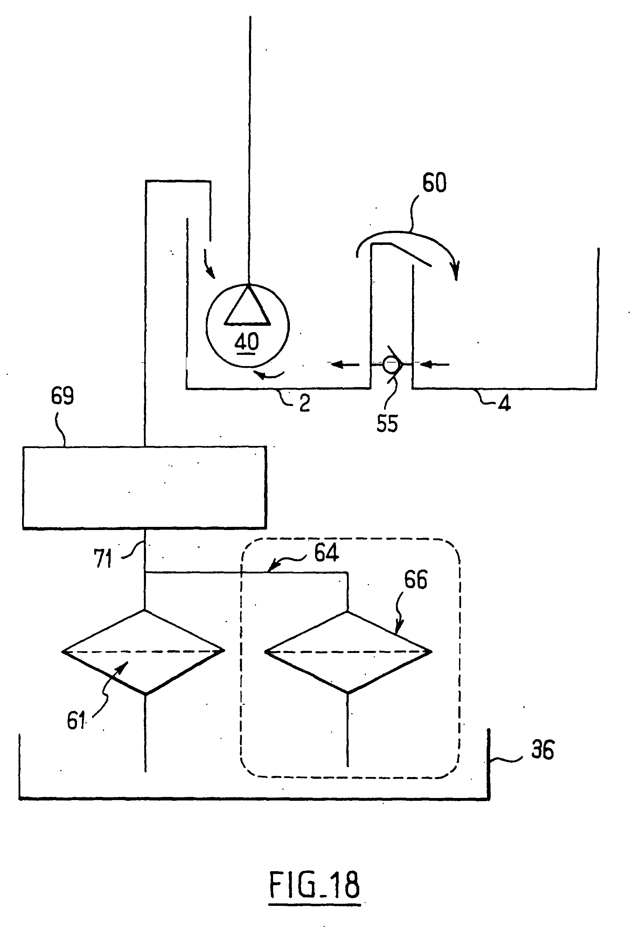

En référence à la figure 5, le bol principal 2 comporte éventuellement un conduit 64 communiquant avec la crépine 61 et muni à une extrémité d'un filtre 66, servant ici de filtre d'extension. Le filtre 66 s'étend sous le bol auxiliaire 4. Le filtre 66 permet d'augmenter la surface de filtrage et de capter l'essence dans d'autres zones du réservoir éloignées du bol principal 2. Toutefois, la communication entre le bol principal 2 et la cuve pourrait alternativement se faire via ce seul filtre 66. Le diagramme de la figure 18 illustre cette circulation du carburant.

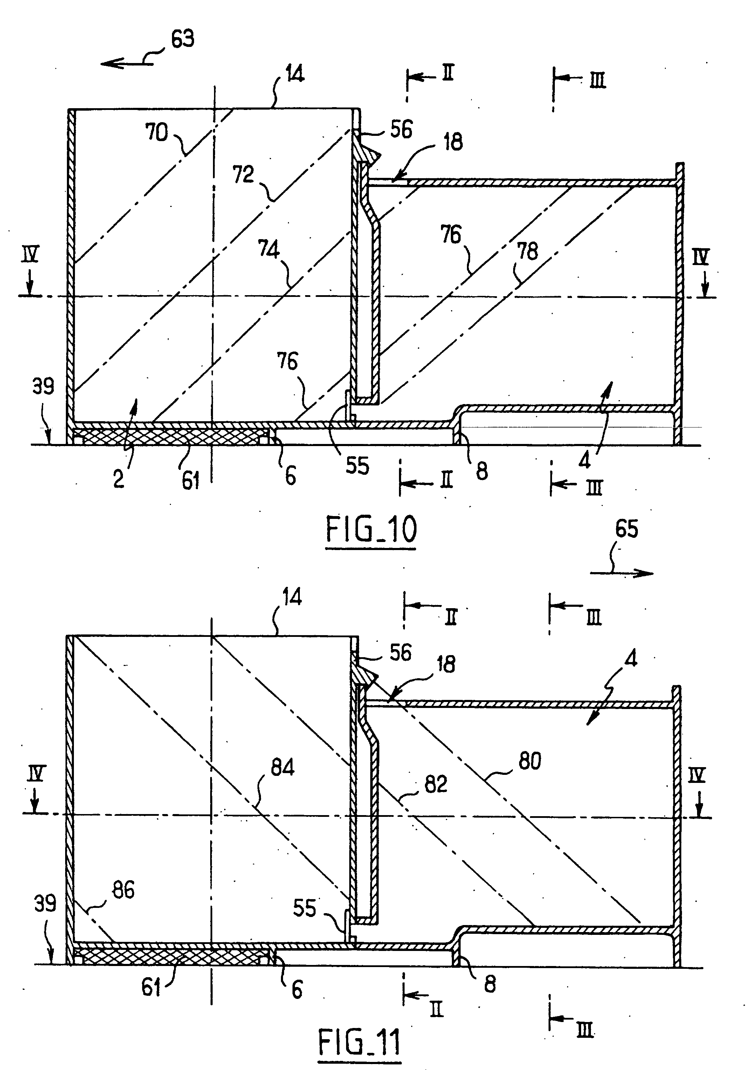

La figure 10 montre différentes situations du niveau de carburant dans les bols 2, 4 lorsque la cuve 36 subit, du fait du mouvement du véhicule, une accélération parallèle à l'axe 12 du bol auxiliaire 4 et dirigée du bol principal 2 vers le bol auxiliaire 4, comme indiqué par la flèche 63. Par exemple, il s'agit d'une accélération vers la gauche si le bol principal 2 est disposé à gauche du bol auxiliaire 4 dans le véhicule. On considère ici que la cuve de carburant 36 est alors presque totalement vide, le dispositif de réserve contenant le seul reste de carburant. Le niveau du carburant s'oriente alors en fonction de cette accélération et de la pesanteur.

En débordant du bol principal 2, notamment vers le bol auxiliaire 4, le carburant passe dans le bol principal 2 du niveau 70 au niveau 72 qui coupe géométriquement le bord supérieur 56 du bol principal. Le carburant dans le bol principal est alors utilisable par la pompe 40 tant que son niveau 74 se situe entre les niveaux 72 et 76, ce dernier étant voisin du clapet antiretour 55. Le bol auxiliaire 4 peut alimenter le bol principal 2 par le conduit 54 tant que le niveau dans le bol auxiliaire 4 n'atteint pas le niveau 78 où il passe au-dessous du clapet.

En référence à la figure 11, l'accélération est cette fois orientée en sens inverse, vers la droite, comme le montre la flèche 65. Le bol auxiliaire 4 déborde, notamment vers le bol principal 2, jusqu'à atteindre le niveau 80 passant géométriquement par le bord supérieur 56. La partie de carburant restante peut ensuite entièrement passer dans le bol principal 2 via le conduit 54. Dans le bol principal 2, le carburant déborde vers la gauche jusqu'à atteindre le niveau 84 passant géométriquement par le bord supérieur 14 du bol principal 2. La quasi totalité du contenu du bol principal 2 peut alors être pompée.

On voit donc que, dans chaque cas, la pompe 40 peut être alimentée par la quasi totalité du bol principal 2 et une partie importante du bol auxiliaire 4. La quantité de carburant effectivement utilisable par la pompe peut encore être augmentée en munissant le bol principal 2 d'un couvercle, par exemple ouvert sur la droite en direction du bol auxiliaire 4 pour continuer à permettre le débordement précité.

On pourra prévoir de monter le bol principal 2 seul, sans le bol auxiliaire 4. A cette fin, on obturera l'embouchure 50 associée au conduit 54.

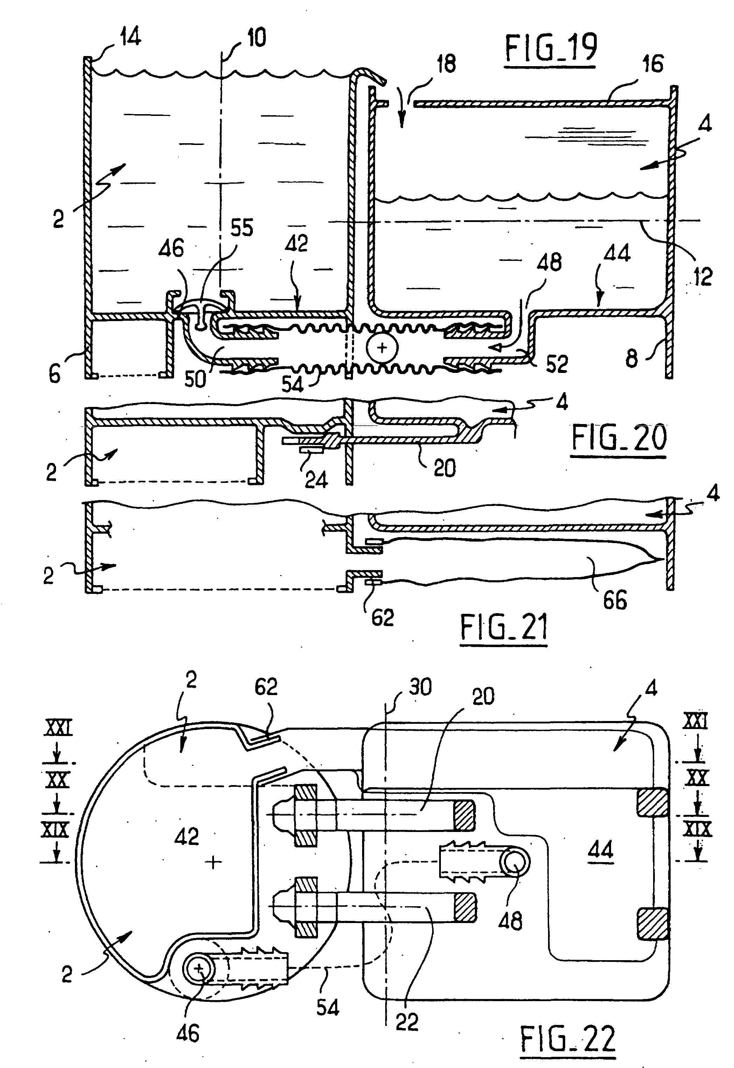

Les figures 19 à 22 montrent un deuxième mode de réalisation du dispositif de l'invention.

Cette fois, les pattes 20, 22 sont identiques entre elles. Elles sont disposées de part et d'autre d'un plan longitudinal médian commun des bols passant par leurs axes 10, 12. Le conduit 54 a une forme en "S", les embouchures 50, 52 des bols associées à ce conduit communiquant avec une zone centrale du fond 42, 44 de chaque bol. L'axe d'articulation 30 défini par les pattes 20, 22 passe par un tronçon central du conduit 54 en "S".

Bien entendu, on pourra apporter à l'invention de nombreuses modifications sans sortir du cadre de celle-ci.

La liaison entre les bols 2, 4 pourra comprendre un coulissement relatif des bols.

## Revendications

1. Dispositif de réserve pour un réservoir de carburant (36) de véhicule, comportant au moins deux bols de réserve (2, 4), **caractérisé en ce qu'**il comporte des moyens de liaison (20, 22) adaptés à relier les deux bols (2, 4) l'un à l'autre par une liaison non rigide.

2. Dispositif selon la revendication 1, **caractérisé en ce que** les moyens de liaison (20, 22) sont adaptés à relier les deux bols (2, 4) par une articulation.

3. Dispositif selon la revendication 2, **caractérisé en ce que** les moyens de liaison (20, 22) comportent au moins une partie flexible adaptée à relier les deux bols (2, 4).

4. Dispositif selon l'une quelconque des revendications 1 à 3, **caractérisé en ce que** les moyens de liaison (20, 22) sont d'une seule pièce avec l'un (4) des bols et sont adaptés à être fixés à l'autre bol (2).

5. Dispositif selon la revendication 4, **caractérisé en ce que** les moyens de liaison (20, 22) sont adaptés à être fixés à l'autre bol (2) par encliquetage.

6. Dispositif selon l'une quelconque des revendications 1 à 5, **caractérisé en ce que** les moyens de liaison (20, 22) sont adaptés à relier des bases (6, 8) de chaque bol (2, 4) l'une à l'autre.

7. Dispositif selon l'une quelconque des revendications 1 à 6, **caractérisé en ce que** l'un (2) des bols présente une plus grande section suivant un plan transversal parallèle à une base (6) du bol, de même forme générale qu'une plus grande section de l'autre bol (4) suivant un plan transversal perpendiculaire à une base (8) de l'autre bol et parallèle à un axe (30) de l'articulation.

8. Dispositif selon la revendication 7, **caractérisé en ce que** l'un (2) des bols a une forme générale profilée suivant une direction (10) perpendiculaire à une base (6) du bol, l'autre bol (4) ayant une forme générale profilée suivant une direction (12), parallèle à une base (8) de l'autre bol et perpendiculaire à un axe (30) de l'articulation.

9. Dispositif selon l'une quelconque des revendications 1 à 8, **caractérisé en ce qu'**il comporte des moyens de rigidification (32, 34) pour relier rigidement les deux bols (2, 4) l'un à l'autre.

10. Dispositif selon la revendication 9, **caractérisé en ce que** les moyens de rigidification (32, 34) sont adaptés à coopérer avec les moyens de liaison (20, 22) pour relier rigidement les deux bols.

11. Dispositif selon l'une quelconque des revendications 9 ou 10, **caractérisé en ce que** les moyens de rigidification (32, 34) comprennent des moyens d'encliquetage.

12. Dispositif selon l'une quelconque des revendications 1 à 11, **caractérisé en ce qu'**il comporte un conduit (54) adapté à assurer une communication de carburant directement de l'un à l'autre des bols (2, 4).

13. Dispositif selon la revendication 12, **caractérisé en ce qu'**il comporte un clapet antiretour (55) agencé pour permettre une alimentation en carburant d'un premier (2) des bols au moyen du conduit (54) à partir d'un deuxième (4) des bols, en interdisant une alimentation en carburant du deuxième bol (4) au moyen du conduit (54) à partir du premier bol (2).

14. Dispositif selon l'une quelconque des revendications 12 ou 13, **caractérisé en ce que** le conduit (54) relie une zone (46) la plus basse de l'un des bols (2) à une zone (48) la plus basse de l'autre bol (4).

15. Dispositif selon l'une quelconque des revendications 1 à 14, **caractérisé en ce qu'**il est agencé pour permettre un transfert de carburant à partir de l'un (2) des bols directement jusqu'à l'autre (4) bol, par dessus des bords (14, 34) des deux bols.

16. Dispositif selon l'une quelconque des revendications 1 à 15, **caractérisé en ce qu'**au moins l'un (4) parmi les deux bols comporte un couvercle (16) obturant partiellement une zone supérieure du bol.

17. Dispositif selon l'une quelconque des revendications 1 à 16, **caractérisé en ce qu'**il comporte au moins un filtre (61, 66) agencé pour permettre une alimentation en carburant de l'un (2) des bols à partir du réservoir à travers le filtre.

18. Dispositif selon la revendication 17, **caractérisé en ce que** chaque filtre (61, 66) s'étend sous l'un respectif des bols (2, 4).

19. Dispositif selon la revendication 17 ou 18, **caractérisé en ce que** le filtre (66) est adapté à s'étendre au-dessous de l'autre bol (4).

20. Réservoir de carburant pour véhicule, comportant une cuve (36), **caractérisé en ce qu'**il comporte un dispositif selon l'une des revendications précédentes.

21. Réservoir selon la revendication 20, **caractérisé en ce que** la cuve (36) présente une ouverture (38) permettant d'introduire dans la cuve les bols (2, 4) du dispositif, l'ouverture (38) ayant des dimensions juste suffisantes pour l'introduction de l'un des bols.

## Claims

1. A reserve device for a vehicle fuel tank (36), the device comprising at least two reserve bowls (2, 4) and being **characterized in that** it further comprises connection means (20, 22) adapted to connect the two bowls (2, 4) together via a non-rigid connection.

2. A device according to claim 1, **characterized in that** the connection means (20, 22) are adapted to interconnect the two bowls (2, 4) via a hinge.

3. A device according to claim 2, **characterized in that** the connection means (20, 22) comprise at least one flexible portion adapted to interconnect the two bowls (2, 4).

4. A device according to any one of claims 1 to 3, **characterized in that** the connection means (20, 22) are integral with one of the bowls (4) and are adapted to be fixed to the other bowl (2).

5. A device according to claim 4, **characterized in that** the connection means (20, 22) are adapted to be fixed to the other bowl (2) by snap-fastening.

6. A device according to any one of claims 1 to 5, **characterized in that** the connection means (20, 22) are adapted to connect together the bottoms (6, 8) of the bowls (2, 4).

7. A device according to any one of claims 1 to 6, **characterized in that** one of the bowls (2) presents a larger section in a transverse plane parallel to a bottom (6) of the bowl, having the same general shape as a larger section of the other bowl (4) in a transverse plane parallel to a bottom (8) of the other bowl and parallel to a hinge axis (30).

8. A device according to claim 7, **characterized in that** one of the bowls (2) is generally tapering in shape in a direction (10) perpendicular to a base (6) of the bowl, the other bowl (4) being generally tapering in a shape in a direction (12) parallel to a base (8) of the other bowl and perpendicular to a hinge axis (30).

9. A device according to any one of claims 1 to 8, **characterized in that** it includes stiffening means (32, 34) for rigidly connecting the two bowls (2, 4) together.

10. A device according to claim 9, **characterized in that** the stiffening means (32, 34) are adapted to co-operate with the connection means (20, 22) for rigidly interconnecting the two bowls.

11. A device according to claim 9 or claim 10, **characterized in that** the stiffening means (32, 34) comprise snap-fastening means.

12. A device according to any one of claims 1 to 11, **characterized in that** it includes a duct (54) adapted to provide fuel communication directly from one of the bowls (2, 4) to the other.

13. A device according to claim 12, **characterized in that** it includes a non-return valve (55) arranged to allow fuel to be fed via the duct (54) from a second bowl (4) to a first bowl (2), while preventing fuel from being fed via the duct (54) from the first bowl (2) to the second bowl (4)

14. A device according to claim 12 or claim 13, **characterized in that** the duct (54) connects a lowest zone (46) of one of the bowls (2) to a lowest zone (48) of the other bowl (4).

15. A device according to any one of claims 1 to 14, **characterized in that** it is arranged to allow fuel to be transferred from one of the bowls (2) directly to the other bowl (4) over the rims (14, 34) of the two bowls.

16. A device according to any one of claims 1 to 15, **characterized in that** at least one of the two bowls (4) has a lid (16) partially closing a top zone of the bowl.

17. A device according to any one of claims 1 to 16, **characterized in that** it includes at least one filter (61, 66) arranged to enable fuel to be fed to one of the bowls (2) from the tank through the filter.

18. A device according to claim 17, **characterized in that** each filter (61, 66) extends beneath a respective one of the bowls (2, 4).

19. A device according to claim 17 or claim 18, **characterized in that** the filter (66) is adapted to extend beneath the other bowl (4).

20. A vehicle fuel tank comprising a vessel (36) and **characterized in that** it includes a device according to any preceding claim.

21. A tank according to claim 20, **characterized in that** the vessel (36) presents an opening (38) enabling the bowls (2, 4) of the device to be inserted into the vessel, the opening (38) being of dimensions that are just sufficient to enable one of the bowls to be inserted.

## Patentansprüche

1. Reservevorrichtung für einen Kraftstoffbehälter (369 eines Fahrzeugs, mit mindestens zwei Reservebehältern (2, 4), **dadurch gekennzeichnet, daß** sie Verbindungsmittel (20, 22) aufweist, die dazu eingerichtet sind, die beiden Behälter (2, 4) durch eine nicht-steife Verbindung miteinander zu verbinden.

2. Vorrichtung nach Anspruch 1, **dadurch gekennzeichnet, daß** die Verbindungsmittel (20, 22) dazu eingerichtet sind, die beiden Behälter (2, 4) durch eine Anlenkung bzw. gelenkige Verbindung zu verbinden.

3. Vorrichtung nach Anspruch 2, **dadurch gekennzeichnet, daß** die Verbindungsmittel (20, 22) mindestens einen flexiblen Teil aufweisen, der dazu eingerichtet ist, die beiden Behälter (2, 4) zu verbinden.

4. Vorrichtung nach irgendeinem der Ansprüche 1 bis 3, **dadurch gekennzeichnet, daß** die Verbindungsmittel (20, 22) mit dem einen (4) der Behälter ein Stück bilden und dazu eingerichtet sind, am anderen Behälter (2) befestigt zu werden.

5. Vorrichtung nach Anspruch 4, **dadurch gekennzeichnet, daß** die Verbindungsmittel (20, 22) dazu eingerichtet sind, an anderen Behälter (2) durch Verrastung befestigt zu werden.

6. Vorrichtung nach irgendeinem der Ansprüche 1 bis 5, **dadurch gekennzeichnet, daß** die Verbindungsmittel (20, 22) dazu eingerichtet sind, die Unterseiten (6, 8) eines jeden Behälters (2, 4) miteinander zu verbinden.

7. Vorrichtung nach irgendeinem der Ansprüche 1 bis 6, **dadurch gekennzeichnet, daß** der eine (2) der Behälter einen größeren Querschnitt in einer Querebene aufweist, die sich parallel zur Unterseite (6) des Behälters erstreckt, und die selbe allgemeine Form aufweist wie ein größerer Querschnitt des anderen Behälters (4) in einer Querebene, die sich senkrecht zu einer Unterseite (8) des anderen Behälters erstreckt und parallel zu einer Achse (30) der Anlenkung ist.

8. Vorrichtung nach Anspruch 7, **dadurch gekennzeichnet, daß** der eine (2) der Behälter eine profilierte Gesamtform längs einer Richtung (10) senkrecht zu einer Unterseite (6) des Behälters aufweist, während der andere Behälter (4) eine profilierte Gesamtform längs einer Richtung (12) aufweist, die parallel zu einer Unterseite (8) des anderen Behälters und senkrecht zu einer Anlenkungsachse bzw. Gelenkverbindungsachse (30) aufweist.

9. Vorrichtung nach irgendeinem der Ansprüche 1 bis 8, **dadurch gekennzeichnet, daß** sie Aussteifungsmittel (32, 34) aufweist, um die beiden Behälter (2, 4) starr miteinander zu verbinden.

10. Vorrichtung nach Anspruch 9, **dadurch gekennzeichnet, daß** die Aussteifungsmittel (32, 34) dazu eingerichtet sind, mit den Verbindungsmitteln (20, 22) zusammenzuwirken, um die beiden Behälter starr miteinander zu verbinden.

11. Vorrichtung nach irgendeinem der Ansprüche 9 oder 10, **dadurch gekennzeichnet, daß** die Aussteifungsmittel (32, 34) Verrastungsmittel aufweisen.

12. Vorrichtung nach irgendeinem der Ansprüche 1 bis 11, **dadurch gekennzeichnet, daß** sie eine Leitung (54) aufweist, die dazu eingerichtet ist, eine unmittelbare, gegenseitige Kraftstoffverbindung der Behälter (2, 4) sicherzustellen.

13. Vorrichtung nach Anspruch 12, **dadurch gekennzeichnet, daß** sie ein Rückschlagventil (55) aufweist, das dazu eingerichtet ist, eine Kraftstoffeinspeisung eines ersten (2) der Behälter mittels einer Leitung (54) von einem zweiten Behälter (4) her zu gestatten, während es eine Kraftstoffeinspeisung des zweiten Behälters (4) vom ersten Behälter (2) her mittels der Leitung 54 untersagt.

14. Vorrichtung nach irgendeinem der Ansprüche 12 oder 13, **dadurch gekennzeichnet, daß** die Leitung (54) eine tiefstliegende Zone (46) des einen der Behälter (2) mit einer tiefstliegenden Zone (48) des anderen Behälters (4) verbindet.

15. Vorrichtung nach irgendeinem der Ansprüche 1 bis 14, **dadurch gekennzeichnet, daß** sie dazu eingerichtet ist, eine Überführung von Kraftstoff von einem (2) der Behälter unmittelbar bis zum anderen (4) Behälter über die Ränder (14, 34) der beiden Behälter weg zu gestatten.

16. Vorrichtung nach irgendeinem der Ansprüche 1 bis 15, **dadurch gekennzeichnet, daß** mindestens der eine (4) unter den beiden Behältern einen Deckel (16) aufweist, der eine obere Zone des Behälters teilweise abdeckt.

17. Vorrichtung nach irgendeinem der Ansprüche 1 bis 16, **dadurch gekennzeichnet, daß** sie mindestens ein Filter (61, 66) aufweist, das dazu eingerichtet ist, eine Kraftstoffeinspeisung des einen (2) der Behälter vom Vorratsbehälter her durch das Filter zu gestatten.

18. Vorrichtung nach Anspruch 17, **dadurch gekennzeichnet, daß** sich jedes Filter (61, 66) unter einem jeweiligen der Behälter (2, 4) erstreckt.

19. Vorrichtung nach irgendeinem der Ansprüche 17 oder 18, **dadurch gekennzeichnet, daß** das Filter (66) dazu eingerichtet ist, sich unter dem anderen Behälter (4) zu erstrecken.

20. Kraftstoff-Vorratsbehälter für ein Fahrzeug mit einem Tank (36), **dadurch gekennzeichnet, daß** er eine Vorrichtung nach einem der vorangehenden Ansprüche aufweist.

21. Vorratsbehälter nach Anspruch 20, **dadurch gekennzeichnet, daß** der Tank (36) eine Öffnung (38) aufweist, die es gestattet, in den Tank die Behälter (2, 4) der Vorrichtung einzubringen, wobei die Öffnung (38) Abmessungen aufweist, die gerade noch für das Einbringen eines der Behälter ausreichen.
